# EUROPÄISCHE PATENTSCHRIFT

(11) **EP 0 582 068 B1**
(45) Veröffentlichungstag und Bekanntmachung des Hinweises auf die Patenterteilung: **22.01.1997**
(21) Anmeldenummer: 93109359.5
(22) Anmeldetag: 11.06.1993
(51) Int. Cl.: F02C 3/02

(54) **Verfahren zum Betrieb einer Gasturbinenanlage**
Method of operating a gas turbine
Procédé pour le fonctionnement d'une turbine à gaz

(30) Priorität: 06.08.1992 DE 4226029
(43) Veröffentlichungstag der Anmeldung: 09.02.1994
(73) Patentinhaber: ASEA BROWN BOVERI AG, 5401 Baden (CH)
(72) Erfinder: Althaus, Rolf, Dr., CH-9230 Flawil (CH)
(74) Vertreter: Klein, Ernest

(56) Entgegenhaltungen:
- EP-A- 0 212 181
- DE-B- 1 030 506
- US-A- 3 043 106

## Beschreibung

Es ist eine Gasturbinenanlage bekanntgeworden, bei der zwischen einem Verdichter und einer mehrstufigen Gasturbine,eine Druckwellenmaschine mit integrierter Verbrennung angeordnet ist. In der Druckwellenmaschine wird im Betrieb eine homogene Brennstoffverteilung in Längsrichtung der Zellen erzeugt. Mit dieser bekannten Druckwellenmaschine ergeben sich Probleme, wenn an diese Druckwellenmaschine sowohl eine Niederdruckturbine als auch eine Hochdruckturbine angeschlossen ist. Beiden Turbinen sollen im Hinblick auf den Werkstoff Gase von optimaler Temperatur und optimalem Druck zugeführt werden. Die maximale Temperatur ist vom Werkstoff der Turbine abhängig. Man ist daher bestrebt, sowohl die Niederdruckturbine, als auch die Hochdruckturbine bei derselben optimalen Temperatur zu betreiben, obwohl die Gase der Niederdruckturbine und der Hochdruckturbine bei unterschiedlichem Druck zugeführt werden.

Die Aufgabe, welche mit der vorliegenden Erfindung gelöst werden soll, besteht nun darin, die Zufuhr von Gasteilmengen zur Druckwellenmaschine so zu gestalten, dass allen Stufen der mehrstufigen Turbine, Gase von gleicher, optimaler Temperatur und dem jeder Stufe entsprechenden Druck zugeführt werden. Dabei ist zu berücksichtigen, dass die Verbrennung eines Brennstoff-Luft-Gemisches in den Zellen bei konstantem Volumen erfolgt und anschliessend das Gas für die einzelnen Stufen unterschiedlich stark entspannt wird, entsprechend dem erforderlichen Druck. Diese Aufgabe wird durch ein Verfahren gelöst, das die Merkmale im Anspruch 1 aufweist.

Durch die unterschiedliche Anreicherung der Teilmengen mit Brennstoff wird erreicht, dass weder der Hochdruckturbine zu heisse Gase, noch der Niederdruckturbine zu kalte Gase zugeführt werden.

Dies hat den Vorteil, dass der Wirkungsgrad der ganzen Gasturbinenanlage verbessert werden kann, da sowohl bei der Hochdruckturbine, als auch bei der Niederdruckturbine Gase von optimaler Temperatur zugeführt werden.

Zwei Ausführungsbeispiele einer Gasturbinenanlage, welche nach dem erfindungsgemässen Verfahren arbeitet, sind im folgenden anhand der beigefügten Zeichnung ausführlich beschrieben. Es zeigen:
- Fig. 1: schematisch den Verlauf des Druckwellenprozesses in der Druckwellenmaschine einer Gasturbinenanlage gemäss einem ersten Ausführungsbeispiel, und
- Fig. 2: das gleiche wie Fig. 1 gemäss einem zweiten Ausführungsbeispiel.

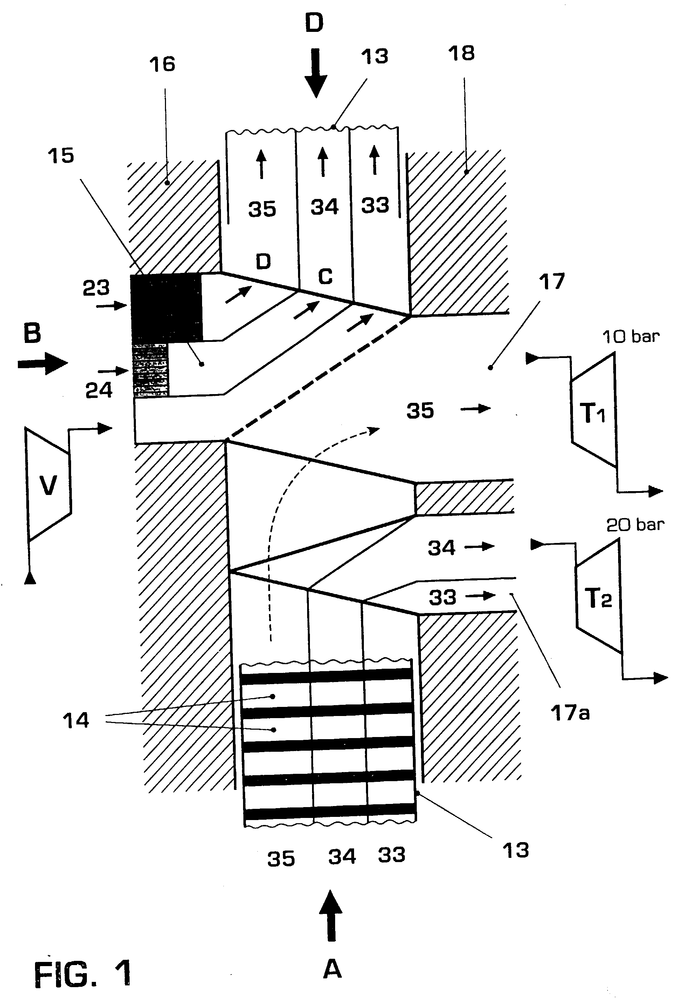

Gemäss Fig. 1 befindet sich ein Zellenrad 13 einer Druckwellenmaschine D, zwischen zwei Seitenteilen 16 und 18.

Das Zellenrad 13 weist eine Anzahl gleichmässig am Umfang verteilter Zellen 14 auf, von denen in Fig. 1 nur zwei Zellen dargestellt sind. Dieses Zellenrad 13 dreht sich relativ zu den beiden Seitenwänden 16 und 18 in Richtung des Pfeiles A. In die Zellen 14 des Zellenrades 13 strömt durch eine Eintrittsöffnung 15 ein Brennstoff-Luft-Gemisch. Es sind mehrere Eintrittsöffnungen vorhanden, von denen aber in Fig. 1 nur eine einzige Eintrittsöffnung 15 dargestellt ist. Aus den Zellen 14 des Zellenrades 13 strömt nach der Verbrennung des Brennstoff-Luft-Gemisches Gas oder Abgas in die Austrittsöffnungen 17 und 17a. Sowohl die Eintrittsöffnung 15, als auch die Austrittsöffnung 17 und 17a befinden sich in den erwähnten Seitenteilen 16 und 18. Sowohl die Eintrittsöffnungen 15, als auch die Austrittsöffnung 17, 17a können sich im einen Seitenteil 16 oder im anderen Seitenteil 18 befinden. Aus Fig. 1 ist ersichtlich, dass das Brennstoff-Luft-Gemisch aus einer Eintrittsöffnung 15 im einen Seitenteil 16 in die Zellen 14 einströmt und das Gas aus zwei Austrittsöffnungen 17 und 17a im anderen Seitenteil 18 ausströmt. Wie weiter unten beschrieben, sind Mittel vorhanden, um die Luft mit unterschiedlichen Mengen von Brennstoff anzureichern. Wie aus Fig. 1 ersichtlich, wird einer untersten Schicht 33 kein Brennstoff zugeführt, d.h. in dieser Schicht strömt nur Luft in die Zellen 14. In einer mittleren Schicht 34 wird nur wenig Brennstoff zugeführt, d.h. in die Zellen 14 strömt ein mageres oder wenig angereichertes oder angefettetes Brennstoff-Luft-Gemisch. In einer dritten oder obersten Schicht 35 wird der Luft mehr Brennstoff beigefügt, d.h. es strömt ein fetteres Brennstoff-Luft-Gemisch in die Zellen 14. Wie durch Pfeil B angedeutet, wird das Brennstoff-Luft-Gemisch, in Achsrichtung des Zellenrades 13, den einzelnen Zellen 14 des Zellenrades 13 zugeführt. Da, wie gesagt, sich das Zellenrad 13 in Richtung des Pfeiles A dreht, wird der Strom des Brennstoff-Luft-Gemisches umgelenkt. Diese Umlenkung des Stromes ist durch Pfeile C und D angedeutet.

Die Luft wird aus einem Verdichter V der Eintrittsöffnung 15 zugeführt. Die Gase gelangen aus den Austrittsöffnungen 17 und 17a zu zwei Turbinen T1 und T2 wobei T1 eine Niederdruckturbine und T2 eine Hochdruckturbine ist. An der Eintrittsöffnung 15 sind Düsen 23 und 24 angeordnet, wobei die Düse 23 das fettere Brennstoff-Luft-Gemisch der obersten Schicht 35 erzeugt und die Düse 24 das magerere Brennstoff-Luft-Gemisch in der mittleren Schicht 34 erzeugt. Diese Düsen 23 und 24 befinden sich möglichst nahe beim Zellenrad 13, damit sich die Schichten 33, 34 und 35 nicht bereits in der Eintrittsöffnung 15 vermischen können.

Die Schichten 33, 34 und 35 können auch als Mengenströme bezeichnet werden, welche Teilmengen 33, 34 und 35 enthalten.

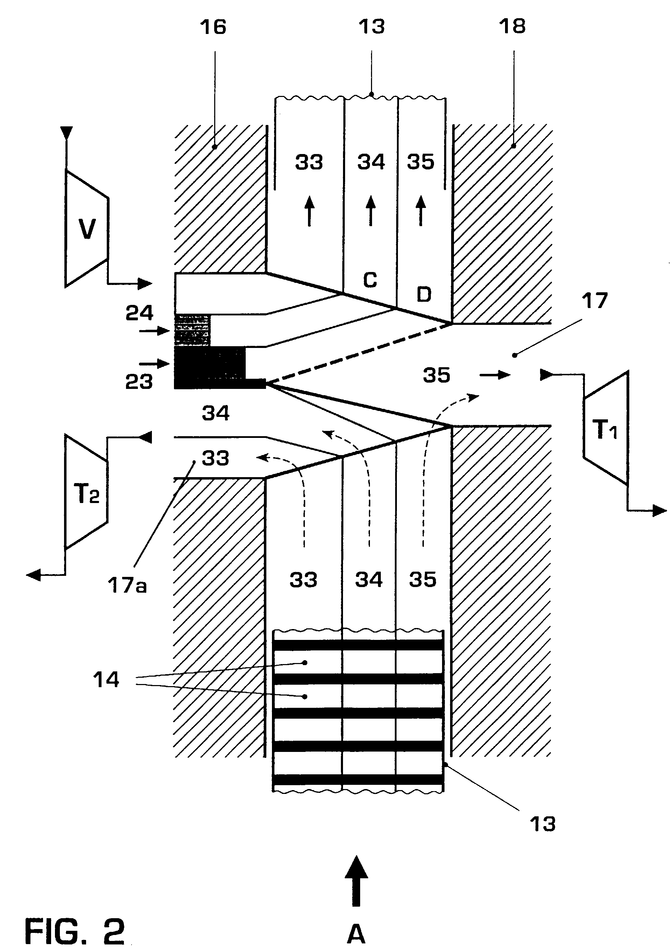

Das zweite Ausführungsbeispiel gemäss Fig. 2 unterscheidet sich gegenüber dem ersten Ausführungsbeispiel nur dadurch, dass
a) die Austrittsöffnung 17 sich im gleichen Seitenteil 16 wie die Eintrittsöffnung 15 befindet
b) die Luftschicht 33 zuerst zugeführt wird und anschliessend die magere Luft-Brennstoffmischung in Schicht 34 und schliesslich die fettere Luft-Brennstoff-Mischung in Schicht 35 zugeführt werden.

In der Eintrittsöffnung 15 wird somit die Reihenfolge der zeitlich aufeinanderfolgenden Schichten umgekehrt, damit beim Austritt die Reihenfolge gleich bleibt.

Die Wirkungsweise der beschriebenen Druckwellenmaschine ist wie folgt:

Durch den Verdichter V wird der Druckwellenmaschine an der Eintrittsöffnung 15 verdichtete Luft zugeführt. Diese verdichtete Luft wird mit Hilfe der beschriebenen Brennstoffdüsen 23, 24 derart mit Brennstoff angereichert, dass drei verschiedene Schichten 33, 34 und 35 entstehen, von denen die erste Schicht 33 keinen Brennstoff enthält, die zweite Schicht 34 nur wenig Brennstoff enthält, so dass in der zweiten Schicht 34 ein mageres Brennstoff-Luft-Gemisch und dass in der dritten Schicht 35 ein fetteres Brennstoff-Luft-Gemisch entsteht. Die erste Schicht 33 wird als Kühlluft zum Kühlen der Wände der Druckwellenmaschine und der Turbine T2 verwendet. Die zweite Schicht 34 wird der ersten Austrittsöffnung 17a der Hochdruckturbine T2 zugeführt und die dritte Schicht 35 wird durch die zweite Austrittsöffnung 17 der Niederdruckturbine T1 zugeführt. Wie aus Fig. 1 ersichtlich, gelangt aus der Eintrittsöffnung 15 zuerst die dritte Schicht 35 in eine der Zellen 14 des Zellenrades 13. Anschliessend gelangt die zweite Schicht 34 in dieselbe Zelle 14 des Zellenrades 13 und zuletzt gelangt die dritte Schicht 33 in die genannte Zelle des Zellenrades 13. Es entstehen somit in jeder Zelle drei Abschnitte: Ein erster Abschnitt 33 mit reiner Luft, ein zweiter Abschnitt 34 mit einem magereren Brennstoff-Luft-Gemisch und ein dritter Abschnitt 35 mit einem fetteren Brennstoff-Luft-Gemisch. Wie aus Fig. 1 ferner ersichtlich ist, strömen diese drei Abschnitte in gleicher Reihenfolge, durch die beiden Austrittsöffnungen 17a und 17, aus der erwähnten Zelle 14 heraus. Da sich das Zellenrad 13 in Richtung des Pfeiles A bewegt, strömt zuerst die erste Schicht 33 mit reiner Luft in die Austrittsöffnung 17a und anschliessend gelangt auch die zweite Schicht 34 mit dem mageren Brennstoff-Luft-Gemisch in die erste Austrittsöffnung 17a. Die Schichten mit weniger Brennstoff gelangen vor den Schichten mit mehr Brennstoff in die Austrittsöffnungen. Etwas später strömt dann die dritte Schicht 35 in die zweite Austrittsöffnung 17. Während die erste Schicht 33 aus der Zelle 14 ausströmt, können sich die beiden anderen Schichten 34 und 35 in der Zelle 14 entspannen. Während anschliessend die zweite Schicht 34 aus der Zelle 14 ausströmt, kann sich die dritte Schicht 35 in der Zelle 14 weiter entspannen. Dabei kühlen sich die Schichten 34 und 35 ab. Da aber diese Schichten 34 und 35 unterschiedlich mit Brennstoff angereichert wurden, hat sich die etwas magerere Schicht 34 weniger stark erhitzt als die etwas fettere Schicht 35. Die Anreicherung der Schichten 34 und 35 wurde so gewählt, dass sämtliche Schichten bei gleicher Temperatur durch die beiden Austrittsöffnungen 17a und 17 zu den beiden Turbinen T1 und T2 gelangen.

Dies bedeutet, dass sowohl die Niederdruckturbine T1, als auch die Hochdruckturbine T2 von gleicher Temperatur zugeführt werden.

Die unterschiedliche Anreicherung der Luft mit Brennstoff hat folgende Vorteile:

Die zweite Schicht 34 mit dem magereren Brennstoff-Luft-Gemisch wird auf etwa 20 bar entspannt und besitzt dabei eine Temperatur von etwa 1200 °C. Die dritte Schicht 35 mit dem fetteren Brennstoff-Luft-Gemisch wird stärker entspannt, d.h. auf etwa 10 bar und besitzt dank der höheren Anreicherung mit Brennstoff ebenfalls eine Temperatur von 1200 °C.

Wäre an der Eintrittsöffnung 15 ein homogenes Brennstoff-LuftGemisch erzeugt worden, dann hätte sich die dritte Schicht 35 infolge der stärkeren Entspannung stärker abgekühlt, z.B. auf 900 °C. Dank der beschriebenen unterschiedlichen Anreicherung einzelner Luftschichten mit Brennstoff ist es möglich, sowohl der Niederdruckturbine T1 als auch der Hochdruckturbine T2 Gase mit der gleichen, optimalen Temperatur von z. B. 1200 °C zuzuführen.

### BEZUGSZIFFERNLISTE

- 13: Zellenrad
- 14: Verdichter
- 15: Eintrittsöffnung
- 16: Seitenwand
- 17: Austrittsöffnung
- 17a: Austrittsöffnung
- 18: Seitenwand

- V: Verdichter
- T1: Niederdruckturbine
- T2: Hochdruckturbine
- D: Druckwellenmaschine

- 33: Schicht Teilmenge eines Mengenstromes Luft
- 34: Schicht Teilmenge eines Mengenstromes magereres Gemisch
- 35: Schicht Teilmenge eines Mengenstromes fetteres Gemisch

## Patentansprüche

1. Verfahren zum Betrieb einer Gasturbinenanlage mit
- einem Verdichter
- einer mit isocorer Verbrennung arbeitenden Druckwellenmaschine; und
- einer mehrstufigen Turbine,
wobei jeder Zelle der Druckwellenmaschine nacheinander Gas-Teilmengen aus verdichteten Mengenströmen unterschiedlicher Zusammensetzungen zugeführt werden; von denen einer ein Luft-Brennstoff-Gemisch ist; und wobei die Teilmengen nach Zündung und gemeinsamer Verdichtung aus der Zelle entlassen und den unterschiedlichen Turbinenstufen zugeführt werden,
und wobei
- zwei Teilmengen (34, 35) erzeugt werden, von denen die erste Teilmenge (34) schwächer und die zweite Teilmenge (35) stärker mit Brennstoff angereichert wird,
- die erste Teilmenge (34) zuerst aus der Zelle (14) entlassen und der Hochdruckturbine (T2) zugeführt wird, und
- die zweite Teilmenge (35) anschliessend aus der Zelle (14) entlassen und der Niederdruckturbine (T1) zugeführt wird.

2. Verfahren nach Anspruch 1, dadurch gekennzeichnet, dass die erste Teilmenge (34) vor der zweiten Teilmenge (35) der Zelle (14) zugeführt wird.

3. Verfahren nach Anspruch 1, dadurch gekennzeichnet, dass die erste Teilmenge (34) nach der zweiten Teilmenge (35) der Zelle (14) zugeführt wird.

4. Verfahren nach Anspruch 1, dadurch gekennzeichnet, dass eine dritte Teilmenge (33) aus einem brennstofffreien Mengenstrom der Zelle (14) zugeführt wird und nach gemeinsamer Verdichtung mit den übrigen Teilmengen (34, 35) vor der zweiten Teilmenge (35) aus der Zelle (14) entlassen wird.

5. Verfahren nach Anspruch 4, dadurch gekennzeichnet, dass die dritte Teilmenge (33) vor der ersten Teilmenge (34) entlassen wird.

6. Verfahren nach Anspruch 4, dadurch gekennzeichnet, dass die dritte Teilmenge (33) der Hochdruckturbine (T2) als Kühlmittel zugeführt wird.

7. Verfahren nach den Ansprüchen 1 und 4, dadurch gekennzeichnet, dass die Teilmengen (33, 34, 35) durch seitliche Eintrittsöffnungen (15) in die Zelle (14) einströmen und durch gegenüberliegende Austrittsöffnungen (17, 17a) aus der Zelle (14) ausströmen.

8. Verfahren nach Anspruch 7, dadurch gekennzeichnet, dass die Teilmengen (33, 34, 35) durch auf beiden Seiten der Zelle (14) angeordnete Austrittsöffnungen (17, 17a) ausströmen.

## Claims

1. Method of operating a gas turbine installation with
- a compressor
- a pressure wave machine operating with constant volume combustion; and
- a multi-stage turbine,
whereby partial masses of gas from compressed mass flows of different compositions are supplied consecutively to each cell of the pressure wave machine, of which one mass is an air/fuel mixture, and whereby the partial masses are released from the cell after ignition and joint compression and supplied to the different turbine stages,
and whereby
- two partial masses (34, 35) are generated, of which the first partial mass (34) is less enriched and the second partial mass (35) is more enriched with fuel,
- the first partial mass (34) is released first from the cell (14) and supplied to the high pressure turbine (T2), and
- the second partial mass (35) is subsequently released from the cell (14) and supplied to the low pressure turbine (T1).

2. Method according to Claim 1, characterized in that the first partial mass (34) is supplied to the cell (14) before the second partial mass (35).

3. Method according to Claim 1, characterized in that the first partial mass (34) is supplied to the cell (14) after the second partial mass (35).

4. Method according to Claim 1, characterized in that a third partial mass (33) is supplied to the cell (14) from a mass flow without fuel and, after joint compression with the remaining partial masses (34, 35), is released from the cell (14) before the second partial mass (35).

5. Method according to Claim 5, characterized in that the third partial mass (33) is released before the first partial mass (34).

6. Method according to Claim 4, characterized in that the third partial mass (33) is supplied to the high pressure turbine (T2) as coolant.

7. Method according to Claims 1 and 4, characterized in that the partial masses (33, 34, 35) flow into the cell (14) through lateral inlet openings (15) and flow out of the cell (14) through opposite outlet openings (17, 17a).

8. Method according to Claim 7, characterized in that the partial masses (33, 34, 35) flow out through outlet openings (17, 17a) arranged on both sides of the cell (14).

## Revendications

1. Procédé pour le fonctionnement d'une turbine à gaz comprenant
- un compresseur
- un générateur de pression hydrodynamique fonctionnant avec une combustion isochore et
- une turbine à plusieurs étages,
des quantités partielles successives de gaz composées de courants partiels comprimés de compositions différentes étant acheminées à chaque alvéole du générateur de pression hydrodynamique ; l'une d'entre elles étant un mélange air-combustible ; et les quantités partielles étant évacuées de l'alvéole puis acheminées aux différents étages de la turbine après leur combustion et leur compression commune,
et
- deux quantités partielles (34, 35) étant produites, la première quantité partielle (34) étant plus faiblement et la deuxième quantité partielle (35) étant plus fortement enrichie en combustible,
- la première quantité partielle (34) étant évacuée en premier de l'alvéole (14) et acheminée à la turbine haute pression (T2), et
- la deuxième quantité partielle (35) étant ensuite évacuée de l'alvéole (14) et acheminée à la turbine basse pression (T1).

2. Procédé selon la revendication 1, caractérisé par le fait que la première quantité partielle (34) est acheminée à l'alvéole (14) avant la deuxième quantité partielle (35).

3. Procédé selon la revendication 1, caractérisé par le fait que la première quantité partielle (34) est acheminée à l'alvéole (14) après la deuxième quantité partielle (35).

4. Procédé selon la revendication 1, caractérisé par le fait qu'une troisième quantité partielle (33) composée d'un courant dépourvu de combustible est acheminée à l'alvéole (14) et qu'elle est évacuée de l'alvéole (14) avant la deuxième quantité partielle (35) après une compression commune avec les autres quantités partielles (34, 35).

5. Procédé selon la revendication 4, caractérisé par le fait que la troisième quantité partielle (33) est évacuée avant la première quantité partielle (34).

6. Procédé selon la revendication 4, caractérisé par le fait que la troisième quantité partielle (33) est acheminée à la turbine haute pression (T2) en tant qu'agent de refroidissement.

7. Procédé selon les revendications 1 et 4, caractérisé par le fait que les quantités partielles (33, 34, 35) pénètrent dans l'alvéole (14) au travers d'orifices d'admission (15) latéraux et qu'elles s'échappent de l'alvéole (14) au travers d'orifices d'échappement (17, 17a) se trouvant du côté opposé.

8. Procédé selon la revendication 7, caractérisé par le fait que les quantités partielles (33, 34, 35) s'échappent au travers d'orifices d'échappement (17, 17a) disposés des deux côtés de l'alvéole (14).
